# EUROPÄISCHE PATENTSCHRIFT

(11) **EP 3 857 174 B1**
(45) Veröffentlichungstag und Bekanntmachung des Hinweises auf die Patenterteilung: **04.12.2024**
(21) Anmeldenummer: 19765672.1
(22) Anmeldetag: 03.09.2019
(51) Int. Cl.: G01D 18/00, G01D 3/08, G01P 15/18

(54) **VERFAHREN FÜR EINE SENSORANORDNUNG**
METHOD FOR A SENSOR ARRANGEMENT
PROCÉDÉ POUR UN AGENCEMENT DE CAPTEURS

(30) Priorität: 24.09.2018 DE 102018123391
(43) Veröffentlichungstag der Anmeldung: 04.08.2021
(73) Patentinhaber: HELLA GMBH & CO. KGAA, 59552 Lippstadt (DE)
(72) Erfinder: IRLE, Henning, 59557 Lippstadt (DE)
(86) Internationale Anmeldenummer: PCT/EP2019/073408
(87) Internationale Veröffentlichungsnummer: WO 2020/064278

(56) Entgegenhaltungen:
- DE-A1- 10 333 997
- DE-A1- 102013 000 205
- US-A1- 2004 254 690
- US-A1- 2009 240 393

## Beschreibung

Die vorliegende Erfindung bezieht sich auf ein Verfahren für eine Sensoranordnung eines Fahrzeugs.

Derartige Verfahren für Sensoranordnungen sind aus dem Stand der Technik in zahlreichen Ausführungsvarianten bereits bekannt.

Beispielsweise ist aus der DE 103 33 997 B4 eine Sensoranordnung für ein Landfahrzeug bekannt, wobei die Sensoranordnung einen Niveausensor zum Messen der Relativlage zumindest eines Rades gegenüber einer Karosserie des Landfahrzeugs aufweist, und wobei in einem Gehäuse des Niveausensors zumindest ein Beschleunigungssensor angeordnet ist.

Ferner ist aus der DE 10 2013 000 205 A1 ein Verfahren zur Drehzahlsensierung bei einem Fahrzeug mittels einer Sensoranordnung mit einem Drehzahlsensor bekannt. Das Verfahren umfasst die folgenden Verfahrensschritte: Ermitteln eines Ist-Luftspaltwerts des Drehzahlsensors und Vergleich dieses Ist-Luftspaltwerts mit vorher festgelegten und in der Sensoranordnung abgespeicherten Vorgabe-Luftspaltwerten des Drehzahlsensors für eine zeitlich nachfolgende Betriebsroutine des Drehzahlsensors nach dem Einbau der Sensoranordnung in das Fahrzeug; falls der automatisch ermittelte Ist-Luftspaltwert mit einem der abgespeicherten Vorgabe-Luftspaltwerte übereinstimmt, Abspeicherung dieses Ist-Luftspaltwerts als neuen Soll-Luftspaltwert für einen zeitlich nachfolgenden Betrieb des Drehzahlsensors der Sensoranordnung; falls der ermittelte Ist-Luftspaltwert mit keinem abgespeicherten Vorgabe-Luftspaltwert übereinstimmt, Ausgabe einer Fehlermeldung.

Aus der US 2009 240 393 A1 ist darüber hinaus ein Verfahren zur Kontrolle einer nicht korrekten Installation eines Sensors in einem Fahrzeug bekannt, bei dem eine auf einer Giergeschwindigkeit basierende erste Indikation einer Richtung des Sensors und eine zumindest teilweise auf einem Lenkwinkel basierende zweite Richtung des Sensors ermittelt werden, wobei die zweite Richtung automatisch geändert wird, wenn sich die erste Indikation und die zweite Indikation der Richtung des Sensors voneinander unterscheiden.

Hier setzt die vorliegende Erfindung an.

Der vorliegenden Erfindung liegt die Aufgabe zugrunde, die Verwendung einer Sensoranordnung bei einem Fahrzeug zu vereinfachen.

Diese Aufgabe wird durch ein Verfahren mit den Merkmalen des Anspruchs 1 gelöst, das die folgenden Verfahrensschritte aufweist: Selbstkalibrierung eines Fahrzeuggrößensensors der Sensoranordnung in einer Selbstkalibrierungsroutine der Sensoranordnung, bevorzugt nach dem Einbau der Sensoranordnung in das Fahrzeug, wobei die Ist-Lage und/oder die Ist-Position der Sensoranordnung mittels der Sensoranordnung automatisch ermittelt und mit mindestens einer vorher festgelegten und in der Sensoranordnung abgespeicherten Soll-Lage und/oder Soll-Position der Sensoranordnung für die mindestens eine Betriebsroutine der Sensoranordnung verglichen wird und Ausgabe einer Fehlermeldung, falls die mittels der Sensoranordnung automatisch ermittelte Ist-Lage und/oder Ist-Position der Sensoranordnung mit keiner der mindestens einen Soll-Lage und/oder Soll-Position der Sensoranordnung im Wesentlichen übereinstimmt, oder, falls die mittels der Sensoranordnung automatisch ermittelte Ist-Lage und/oder Ist-Position der Sensoranordnung mit einer der mindestens einen Soll-Lage und/oder Soll-Position der Sensoranordnung im Wesentlichen übereinstimmt, Abspeicherung der zu dieser Soll-Lage und/oder Soll-Position der Sensoranordnung korrelierenden Betriebsroutine der Sensoranordnung für einen zeitlich nachfolgenden Betrieb des selbstkalibrierten Fahrzeuggrößensensors der Sensoranordnung, wobei die automatische Ermittlung der Ist-Lage und/oder der Ist-Position der Sensoranordnung in deren Selbstkalibrierungsroutine in Abhängigkeit mindestens einer Beschleunigungsmessung mindestens eines Beschleunigungssensors der Sensoranordnung erfolgt.

Die Unteransprüche betreffen vorteilhafte Weiterbildungen der Erfindung.

Ein wesentlicher Vorteil der Erfindung liegt insbesondere darin, dass die Verwendung einer Sensoranordnung bei einem Fahrzeug vereinfacht ist. Die erfindungsgemäße Selbstkalibrierung des Fahrzeuggrößensensors der Sensoranordnung ermöglicht es beispielsweise, die erfindungsgemäße Sensoranordnung mit dem Fahrzeuggrößensensor als Gleichteil auszubilden und dieses Gleichteil in einer in den technischen Grenzen beliebigen Lage und/oder Position an dem Fahrzeug zu verbauen. Dies ist insbesondere dann von Vorteil, wenn eine Mehrzahl eines Fahrzeuggrößensensors zur Erfassung einer Fahrzeuggröße an voneinander verschiedenen Positionen der Sensoranordnung an dem Fahrzeug und/oder in voneinander verschiedenen Lagen der Sensoranordnung an dem Fahrzeug verbaut ist. Die Erfindung ermöglicht dies auf besonders einfache Weise, indem mittels der Sensoranordnung selbst eine Ist-Lage und/oder eine Ist-Position der Sensoranordnung automatisch ermittelt wird und mit mindestens einer vorher festgelegten und abgespeicherten Soll-Lage und/oder Soll-Position der Sensoranordnung für mindestens eine Betriebsroutine der Sensoranordnung für einen zeitlich nachfolgenden Betrieb des auf diese Art selbstkalibrierten Fahrzeuggrößensensors verglichen wird, wobei die automatische Ermittlung der Ist-Lage und/oder der Ist-Position der Sensoranordnung in deren Selbstkalibrierungsroutine in Abhängigkeit mindestens einer Beschleunigungsmessung mindestens eines Beschleunigungssensors der Sensoranordnung erfolgt. Auf diese Weise ist die Ist-Lage und/oder die Ist-Position der erfindungsgemäßen Sensoranordnung messtechnisch einfach ermittelbar.

Der Fahrzeuggrößensensor der erfindungsgemäßen Sensoranordnung ist also vorab für mindestens eine zu mindestens einer Soll-Lage und/oder Soll-Position der Sensoranordnung korrelierenden Betriebsroutine der Sensoranordnung ausgebildet und eingerichtet, wobei dann in der Selbstkalibrierungsroutine der Sensoranordnung die mindestens eine Betriebsroutine mittels der automatischen Ermittlung der Ist-Lage und/oder der Ist-Position der Sensoranordnung automatisch ausgewählt und für den späteren Betrieb des Fahrzeuggrößensensors der Sensoranordnung abgespeichert wird. Sollte die mindestens eine Betriebsroutine mittels der oben genannten Vorgehensweise nicht ermittelbar sein, also die mittels der Sensoranordnung automatisch ermittelte Ist-Lage und/oder Ist-Position der Sensoranordnung mit keiner der mindestens einen Soll-Lage und/oder Soll-Position der Sensoranordnung im Wesentlichen übereinstimmen, so wird eine Fehlermeldung auf dem Fachmann bekannte Weise ausgegeben. Entsprechend ist sichergestellt, dass der Fahrzeuggrößensensor der Sensoranordnung und mit diesem kooperierende Systeme des Fahrzeugs nicht in ungewünschter Weise arbeiten. Die Erfindung ist dabei beispielsweise bei einer Erstmontage des Fahrzeugs und damit bei einer Erstmontage der erfindungsgemäßen Sensoranordnung vorteilhaft einsetzbar. Darüber hinaus ist die Erfindung auch bei einem Wartungsfall, beispielsweise bei einer Reparatur oder einem Austausch der Sensoranordnung oder des Fahrzeuggrößensensors der Sensoranordnung, vorteilhaft.

Unter der jeweiligen Position der Sensoranordnung ist die Anordnung der Sensoranordnung als solches, also beispielsweise eines Schwerpunktes der Sensoranordnung, relativ zu dem Rest des Fahrzeugs zu verstehen. Mit der jeweiligen Lage der Sensoranordnung ist die räumliche Ausrichtung der Sensoranordnung relativ zu dem Rest des Fahrzeugs gemeint.

Grundsätzlich ist es denkbar, dass lediglich eine einzige Soll-Lage und/oder eine einzige Soll-Position der Sensoranordnung einer einzigen dazu korrelierenden Betriebsroutine der Sensoranordnung für den Betrieb des selbstkalibrierten Fahrzeuggrößensensors vorher festgelegt und abgespeichert sind/ist. Eine besonders vorteilhafte Weiterbildung des erfindungsgemäßen Verfahrens sieht vor, dass eine Mehrzahl von voneinander verschiedenen Soll-Lagen und/oder Soll-Positionen der Sensoranordnung einer Mehrzahl von dazu korrelierenden und voneinander verschiedenen Betriebsroutinen für die Sensoranordnung abgespeichert sind. Hierdurch ist beispielsweise der Verbau einer Mehrzahl von einer als Gleichteil ausgebildeten Sensoranordnung an voneinander verschiedenen Positionen der Sensoranordnung und/oder in voneinander verschiedenen Lagen der Sensoranordnung ermöglicht.

Eine weitere vorteilhafte Weiterbildung des erfindungsgemäßen Verfahrens sieht vor, dass die mittels der Selbstkalibrierungsroutine automatisch ermittelte Betriebsroutine unveränderlich für den zeitlich nachfolgenden Betrieb des selbstkalibrierten Fahrzeuggrößensensors der Sensoranordnung abgespeichert wird. Auf diese Weise ist gewährleistet, dass die einmal ermittelte und abgespeicherte Betriebsroutine für den Betrieb des Fahrzeuggrößensensors der Sensoranordnung nicht in ungewünschter Weise nachträglich manipuliert werden kann. Im Unterschied dazu ist es aber grundsätzlich denkbar, dass die mittels der Selbstkalibrierungsroutine automatisch ermittelte Betriebsroutine veränderlich für den zeitlich nachfolgenden Betrieb des selbstkalibrierten Fahrzeuggrößensensors der Sensoranordnung abgespeichert wird. Beispielsweise wäre es dadurch möglich, die Sensoranordnung für eine erneute erfindungsgemäße Selbstkalibrierungsroutine einzurichten. Dies könnte mittels einer Reset-Taste oder dergleichen erfolgen.

Eine andere vorteilhafte Weiterbildung des erfindungsgemäßen Verfahrens sieht vor, dass die Selbstkalibrierungsroutine mit einer erstmaligen Spannungsversorgung der Sensoranordnung automatisch gestartet wird. Hierdurch ist die Selbstkalibrierungsroutine auf besonders einfache Art auslösbar. Beispielsweise kann die Selbstkalibrierungsroutine bei der Erstmontage des Fahrzeugs am Bandende oder in einem Wartungsfall in einer Werkstatt durch eine elektrische Verbindung der erfindungsgemäßen Sensoranordnung mit einer Spannungsversorgung, beispielsweise der Fahrzeugbatterie, gestartet werden.

Grundsätzlich ist die Auslösung der Selbstkalibrierungsroutine jedoch nach Art und Funktionsweise in weiten geeigneten Grenzen frei wählbar. Dies gilt ebenfalls für deren Beendigung. Eine vorteilhafte Weiterbildung des erfindungsgemäßen Verfahrens sieht diesbezüglich vor, dass die Selbstkalibrierungsroutine nach einer erstmaligen Übereinstimmung der Ist-Lage und/oder der Ist-Position der Sensoranordnung mit einer der mindestens einen abgespeicherten Soll-Lage und/oder Soll-Position der Sensoranordnung automatisch beendet wird. Auf diese Weise ist die Beendigung der Selbstkalibrierungsroutine mit lediglich geringem Aufwand ermöglicht.

Eine besonders vorteilhafte Weiterbildung des erfindungsgemäßen Verfahrens sieht vor, dass die mittels der Selbstkalibrierungsroutine automatisch ermittelte und für den zeitlich nachfolgenden Betrieb des selbstkalibrierten Fahrzeuggrößensensors der Sensoranordnung abgespeicherte Betriebsroutine der mindestens einen Betriebsroutine mit einer der erstmaligen Spannungsversorgung der Sensoranordnung zeitlich nachfolgenden weiteren Spannungsversorgung der Sensoranordnung automatisch gestartet wird. Hierdurch ist der Start der Betriebsroutine der erfindungsgemäßen Sensoranordnung auf einfache Weise realisiert. Beispielsweise kann die Betriebsroutine mittels der erstmaligen Inbetriebnahme des Fahrzeugs durch einen Besitzer des Fahrzeugs gestartet werden.

Eine besonders vorteilhafte Weiterbildung des erfindungsgemäßen Verfahrens sieht vor, dass der mindestens eine Beschleunigungssensor als ein Dreiachsensensor ausgebildet ist und die automatische Ermittlung der Ist-Lage und/oder der Ist-Position der Sensoranordnung in Abhängigkeit von jeweils einer Beschleunigungsmessung entlang einer Messachse des Dreiachsensensors erfolgt. Hierdurch ist die Ist-Lage und/oder die Ist-Position der erfindungsgemäßen Sensoranordnung messtechnisch besonders einfach ermittelbar. Dies deshalb, weil mittels der Messung in alle drei Raumrichtungen eine Koordinatentransformation ermöglicht ist.

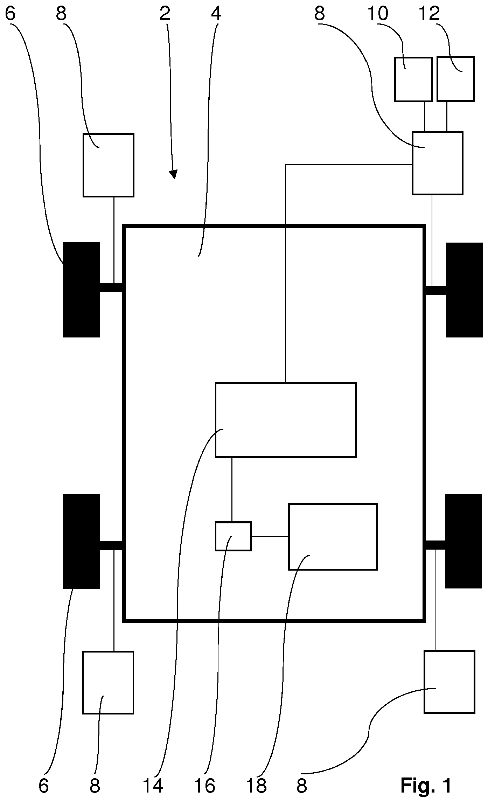

Anhand der beigefügten, grob schematischen Zeichnung wird die Erfindung nachfolgend näher erläutert. Dabei zeigt die einzige Figur 1:
- Fig. 1: ein Ausführungsbeispiel einer erfindungsgemäßen Sensoranordnung.

In Fig. 1 ist ein Ausführungsbeispiel der Erfindung für ein als ein Personenkraftwagen ausgebildetes Fahrzeug 2 exemplarisch dargestellt. An einer Karosserie 4 des Fahrzeugs 2 sind vier Räder 6 angeordnet, mit denen jeweils eine Sensoranordnung 8 auf dem Fachmann bekannte Weise wirkverbunden ist. Insgesamt sind also vier erfindungsgemäße Sensoranordnungen 8 an dem Fahrzeug 2 verbaut, wobei die vier Sensoranordnungen 8 als Gleichteile ausgebildet sind. Die Sensoranordnungen 8 weisen jeweils einen als Fahrzeugniveausensor ausgebildeten Fahrzeuggrößensensor 10 sowie jeweils einen als Dreiachsensensor ausgebildeten Beschleunigungssensor 12 auf. In der Fig. 1 ist der Übersichtlichkeit wegen lediglich eine der vier Sensoranordnungen 8 detailliert dargestellt. Aufgrund der Ausbildung als Gleichteil sind die übrigen Sensoranordnungen 8 gleich dieser Sensoranordnung ausgebildet und eingerichtet. Aufgrund der Ausbildung als Dreiachsensensor kann mittels jedes der Beschleunigungssensoren 12 die Lage und die Position der jeweiligen Sensoranordnung 8 auf dem Fachmann bekannte Weise ermittelt werden. Unter der Position der jeweiligen Sensoranordnung ist die Anordnung dieser Sensoranordnung 8 als solches relativ zu dem

Rest des Fahrzeugs 2 zu verstehen. Also beispielsweise die Anordnung der in der Bildebene von Fig. 1 rechts oben dargestellten Sensoranordnung 8 eben an dieser Stelle des Fahrzeugs 2. Mit der Lage der jeweiligen Sensoranordnung 8 ist die räumliche Ausrichtung dieser Sensoranordnung 8 relativ zu dem Rest des Fahrzeugs 2 gemeint. Also beispielsweise die räumliche Lage der in der Bildebene von Fig. 1 rechts oben dargestellten Sensoranordnung 8, die eben an dieser Stelle des Fahrzeugs 2 angeordnet ist.

Die Sensoranordnungen 8 mit den Fahrzeuggrößensensoren 10 und den Beschleunigungssensoren 12 sind jeweils auf dem Fachmann bekannte Weise mit einer Steuerung 14 des Fahrzeugs 2 signalübertragend verbunden. Die Sensoranordnungen 8 sind mittels der Steuerung 14 und einer Zündung 16 mit einer Batterie 18 des Fahrzeugs 2 stromleitend verbunden. Die genannten Verbindungen der vier Sensoranordnungen 8 sind, analog zu den obigen Ausführungen, der Übersichtlichkeit wegen ebenfalls lediglich für eine der vier Sensoranordnungen 8 in der Fig. 1 dargestellt.

Im Nachfolgenden wird das erfindungsgemäße Verfahren gemäß dem vorliegenden Ausführungsbeispiel und anhand der Fig. 1 näher erläutert.

Bei der Erstmontage des Fahrzeugs 2 werden die vier Sensoranordnungen 8 an den aus der Fig. 1 ersichtlichen Positionen jeweils in einer durch die jeweilige Einbausituation bestimmten Lage auf dem Fachmann bekannte Weise verbaut. Die vier Sensoranordnungen 8 wurden vorab noch nicht in Betrieb genommen, also noch nicht an eine Spannungsversorgung angeschlossen.

Nach dem Einbau der vier Sensoranordnungen 8 in das Fahrzeug 2 verbindet der Monteur jede der vier Sensoranordnungen 8 mit einer Versorgungsspannung, beispielsweise mit der Batterie 18. Die vier Sensoranordnungen 8 werden nun erstmalig mit einer Versorgungsspannung versorgt. Die vier Sensoranordnungen 8 sind derart ausgebildet und eingerichtet, dass mit der erstmaligen Spannungsversorgung der jeweiligen Sensoranordnung 8 eine Selbstkalibrierungsroutine der jeweiligen Sensoranordnung 8 automatisch gestartet wird. Bei dem Durchlaufen der Selbstkalibrierungsroutine findet eine Selbstkalibrierung des Fahrzeuggrößensensors 10 der jeweiligen Sensoranordnung 8 statt, wobei die Ist-Lage und die Ist-Position der jeweiligen Sensoranordnung 8 mittels dieser Sensoranordnung 8 automatisch ermittelt und mit vier vorher festgelegten und in dieser Sensoranordnung 8 abgespeicherten Soll-Lagen und Soll-Positionen dieser Sensoranordnung 8 für insgesamt vier Betriebsroutinen dieser Sensoranordnung 8 verglichen wird. Wie oben bereits erläutert, handelt es sich bei den vier an dem Fahrzeug 2 verbauten Sensoranordnungen 8 um Gleichteile. Entsprechend korrelieren die vier vorher festgelegten und abgespeicherten Soll-Lagen und Soll-Positionen für jeweils eine der vier Betriebsroutinen der jeweiligen Sensoranordnung 8 zu den aus der Fig. 1 ersichtlichen vier voneinander verschiedenen Lagen und Positionen der Sensoranordnungen 8.

Entsprechend korreliert eine erste vorher festgelegte und abgespeicherte Soll-Lage und Soll-Position für eine erste Betriebsroutine der jeweiligen Sensoranordnung 8 zu einer in der Bildebene von Fig. 1 unten links dargestellten Ist-Lage und Ist-Position einer der Sensoranordnungen 8, eine zweite vorher festgelegte und abgespeicherte Soll-Lage und Soll-Position für eine zweite Betriebsroutine der jeweiligen Sensoranordnung 8 zu einer in der Bildebene von Fig. 1 unten rechts dargestellten Ist-Lage und Ist-Position einer der Sensoranordnungen 8, eine dritte vorher festgelegte und abgespeicherte Soll-Lage und Soll-Position für eine dritte Betriebsroutine der jeweiligen Sensoranordnung 8 zu einer in der Bildebene von Fig. 1 oben links dargestellten Ist-Lage und Ist-Position einer der Sensoranordnungen 8 und eine vierte vorher festgelegte und abgespeicherte Soll-Lage und Soll-Position für eine vierte Betriebsroutine der jeweiligen Sensoranordnung 8 zu einer in der Bildebene von Fig. 1 oben rechts dargestellten Ist-Lage und Ist-Position einer der Sensoranordnungen 8.

Für jede Sensoranordnung 8 des Fahrzeugs 2 ist also eine Mehrzahl von voneinander verschiedenen Soll-Lagen und Soll-Positionen dieser Sensoranordnung 8 für eine Mehrzahl von dazu korrelierenden und voneinander verschiedenen Betriebsroutinen für diese Sensoranordnung 8 abgespeichert. Aufgrund der Ausbildung der vier Sensoranordnungen 8 als Gleichteil ist die jeweilige diesbezügliche Einrichtung der vier Sensoranordnungen 8 identisch.

Die jeweilige Selbstkalibrierungsroutine der vier Sensoranordnungen 8 des Fahrzeugs 2 erfolgt in Abhängigkeit von Ausgangssignalen des Beschleunigungssensors 12 der jeweiligen Sensoranordnung 8. Hierzu misst der jeweilige als Dreiachsensensor ausgebildete Beschleunigungssensor 12 die Beschleunigung der korrespondierenden Sensoranordnung 8 in alle drei Raumrichtungen. Mittels Koordinatentransformation wird dann die Ist-Lage und die Ist-Position der jeweiligen Sensoranordnung 8 des Fahrzeugs 2 automatisch ermittelt. Die so ermittelte Ist-Lage und Ist-Position der jeweiligen Sensoranordnung 8 wir dann auf die nachfolgend beschriebene Weise mit den abgespeicherten und jeweils einer Betriebsroutine der jeweiligen Sensoranordnung 8 zugeordneten Soll-Lagen und Soll-Positionen dieser Sensoranordnung 8 verglichen.

Falls die mittels der jeweiligen Sensoranordnung 8 automatisch ermittelte Ist-Lage und Ist-Position dieser Sensoranordnung 8 mit keiner der vier vorher festgelegten und in dieser Sensoranordnung 8 abgespeicherten Soll-Lagen und Soll-Positionen dieser Sensoranordnung 8 im Wesentlichen übereinstimmt, wird mittels dieser Sensoranordnung 8 und der Steuerung 14 auf dem Fachmann bekannte Weise eine Fehlermeldung ausgegeben.

Falls die mittels der jeweiligen Sensoranordnung 8 automatisch ermittelte Ist-Lage und Ist-Position dieser Sensoranordnung 8 mit einer der vier vorher festgelegten und in dieser Sensoranordnung 8 abgespeicherten Soll-Lagen und Soll-Positionen dieser Sensoranordnung 8 im Wesentlichen übereinstimmt, wird die zu dieser Soll-Lage und Soll-Position dieser Sensoranordnung 8 korrelierende Betriebsroutine dieser Sensoranordnung 8 für einen zeitlich nachfolgenden Betrieb des selbstkalibrierten Fahrzeuggrößensensors 10 dieser Sensoranordnung 8 abgespeichert.

Um eine ungewünschte nachträgliche Manipulation der Sensoranordnungen 8 des Fahrzeugs 2 zu verhindern, wird die mittels der jeweiligen Selbstkalibrierungsroutine automatisch ermittelte Betriebsroutine für die jeweilige Sensoranordnung 8 unveränderlich für den zeitlich nachfolgenden Betrieb des selbstkalibrierten Fahrzeuggrößensensors 10 dieser Sensoranordnung 8 abgespeichert.

Für den letztgenannten Fall, also wenn die mittels der jeweiligen Sensoranordnung 8 automatisch ermittelte Ist-Lage und Ist-Position dieser Sensoranordnung 8 mit einer der vier vorher festgelegten und in dieser Sensoranordnung 8 abgespeicherten Soll-Lagen und Soll-Positionen dieser Sensoranordnung 8 im Wesentlichen übereinstimmt, wird die jeweilige Selbstkalibrierungsroutine nach einer erstmaligen Übereinstimmung der Ist-Lage und der Ist-Position der jeweiligen Sensoranordnung 8 mit einer der vier abgespeicherten Soll-Lagen und Soll-Positionen dieser Sensoranordnung 8 automatisch beendet.

Die vier Sensoranordnungen 8 des Fahrzeugs 2 sind ferner derart ausgebildet und eingerichtet, dass die mittels der jeweiligen Selbstkalibrierungsroutine automatisch ermittelte und für den zeitlich nachfolgenden Betrieb des selbstkalibrierten Fahrzeuggrö-ßensensors 10 dieser Sensoranordnung 8 abgespeicherte Betriebsroutine mit einer der erstmaligen Spannungsversorgung dieser Sensoranordnung 8 zeitlich nachfolgenden weiteren Spannungsversorgung dieser Sensoranordnung 8 automatisch gestartet wird. Beispielsweise erfolgt dies bei einer Erstinbetriebnahme des Fahrzeugs 2 mittels der Zündung 16 durch einen Besitzer des Fahrzeugs 2.

Die Erfindung ist nicht auf das vorliegende Ausführungsbeispiel begrenzt. Beispielsweise ist die Erfindung auch bei anderen Fahrzeugen vorteilhaft einsetzbar. Der Fahrzeuggrößensensor ist nicht auf das Gebiet der Fahrzeugniveausensorik beschränkt. Vielmehr kann es sich bei dem Fahrzeuggrößensensor sowie um die mittels des Fahrzeuggrößensensors erfasste Fahrzeuggröße in geeigneten Grenzen um jede beliebige Fahrzeuggröße und nach Art, Funktion, Dimensionierung, Material, Anordnung und Anzahl um jeden beliebigen Fahrzeuggrößensensor handeln. Anstelle, dass eine Mehrzahl von voneinander verschiedenen Soll-Lagen und/oder Soll-Positionen der Sensoranordnung für eine Mehrzahl von dazu korrelierenden und voneinander verschiedenen Betriebsroutinen für die Sensoranordnung abgespeichert sind, kann auch lediglich eine einzige für eine einzige Betriebsroutine der Sensoranordnung vorher festgelegte und abgespeicherte Soll-Lage und/oder Soll-Position vorgesehen sein. In diesem Fall gäbe es also lediglich eine einzige zulässige Soll-Lage und/oder Soll-Position für die Sensoranordnung. Ferner ist es nicht zwingend erforderlich, dass sowohl eine Ist-Lage und eine Ist-Position der erfindungsgemäßen Sensoranordnung erfasst und mit mindestens einer vorher festgelegten und abgespeicherten Soll-Lage und Soll-Position verglichen wird. Im Unterschied dazu kann auch lediglich eine Ist-Lage oder eine Ist-Position erfasst und mit mindestens einer vorher festgelegten und abgespeicherten Soll-Lage oder Soll-Position verglichen werden.

### Bezugszeichenliste

- 2: Fahrzeug
- 4: Karosserie
- 6: Rad
- 8: Sensoranordnung
- 10: Fahrzeuggrößensensor
- 12: Beschleunigungssensor
- 14: Steuerung
- 16: Zündung
- 18: Batterie

## Patentansprüche

1. Verfahren für eine Sensoranordnung (8) eines Fahrzeugs (2), umfassend einen Fahrzeuggrößensensor (10) zur Erfassung mindestens einer Fahrzeuggröße in mindestens einer Betriebsroutine der Sensoranordnung (8), wobei das Verfahren die folgenden Verfahrensschritte aufweist:
- Selbstkalibrierung des Fahrzeuggrößensensors (10) der Sensoranordnung (8) in einer Selbstkalibrierungsroutine der Sensoranordnung (8), bevorzugt nach dem Einbau der Sensoranordnung (8) in das Fahrzeug (2), wobei die Ist-Lage und/oder die Ist-Position der Sensoranordnung (8) mittels der Sensoranordnung (8) automatisch ermittelt und mit mindestens einer vorher festgelegten und in der Sensoranordnung (8) abgespeicherten Soll-Lage und/oder Soll-Position der Sensoranordnung (8) für die mindestens eine Betriebsroutine der Sensoranordnung (8) verglichen wird und
- Ausgabe einer Fehlermeldung, falls die mittels der Sensoranordnung (8) automatisch ermittelte Ist-Lage und/oder Ist-Position der Sensoranordnung (8) mit keiner der mindestens einen Soll-Lage und/oder Soll-Position der Sensoranordnung (8) im Wesentlichen übereinstimmt oder,
- falls die mittels der Sensoranordnung (8) automatisch ermittelte Ist-Lage und/oder Ist-Position der Sensoranordnung (8) mit einer der mindestens einen Soll-Lage und/oder Soll-Position der Sensoranordnung (8) im Wesentlichen übereinstimmt, Abspeicherung der zu dieser Soll-Lage und/oder Soll-Position der Sensoranordnung (8) korrelierenden Betriebsroutine der Sensoranordnung (8) für einen zeitlich nachfolgenden Betrieb des selbstkalibrierten Fahrzeuggrößensensors (10) der Sensoranordnung (8)
**dadurch gekennzeichnet,**
**dass** die automatische Ermittlung der Ist-Lage und/oder der Ist-Position der Sensoranordnung (8) in deren Selbstkalibrierungsroutine in Abhängigkeit mindestens einer Beschleunigungsmessung mindestens eines Beschleunigungssensors (12) der Sensoranordnung (8) erfolgt.

2. Verfahren nach Anspruch 1,
**dadurch gekennzeichnet,**
**dass** eine Mehrzahl von voneinander verschiedenen Soll-Lagen und/oder Soll-Positionen der Sensoranordnung (8) für eine Mehrzahl von dazu korrelierenden und voneinander verschiedenen Betriebsroutinen für die Sensoranordnung (8) abgespeichert sind.

3. Verfahren nach Anspruch 1 oder 2,
**dadurch gekennzeichnet,**
**dass** die mittels der Selbstkalibrierungsroutine automatisch ermittelte Betriebsroutine unveränderlich für den zeitlich nachfolgenden Betrieb des selbstkalibrierten Fahrzeuggrößensensors (10) der Sensoranordnung (8) abgespeichert wird.

4. Verfahren nach einem der Ansprüche 1 bis 3,
**dadurch gekennzeichnet,**
**dass** die Selbstkalibrierungsroutine mit einer erstmaligen Spannungsversorgung der Sensoranordnung (8) automatisch gestartet wird.

5. Verfahren nach einem der Ansprüche 1 bis 4,
**dadurch gekennzeichnet,**
**dass** die Selbstkalibrierungsroutine nach einer erstmaligen Übereinstimmung der Ist-Lage und/oder der Ist-Position der Sensoranordnung (8) mit einer der mindestens einen abgespeicherten Soll-Lage und/oder Soll-Position der Sensoranordnung (8) automatisch beendet wird.

6. Verfahren nach einem der Ansprüche 1 bis 5,
**dadurch gekennzeichnet,**
**dass** die mittels der Selbstkalibrierungsroutine automatisch ermittelte und für den zeitlich nachfolgenden Betrieb des selbstkalibrierten Fahrzeuggrößensensors (10) der Sensoranordnung (8) abgespeicherte Betriebsroutine der mindestens einen Betriebsroutine mit einer der erstmaligen Spannungsversorgung der Sensoranordnung (8) zeitlich nachfolgenden weiteren Spannungsversorgung der Sensoranordnung (8) automatisch gestartet wird.

7. Verfahren nach Anspruch 1 bis 6,
**dadurch gekennzeichnet,**
**dass** der mindestens eine Beschleunigungssensor (12) als ein Dreiachsensensor (12) ausgebildet ist und die automatische Ermittlung der Ist-Lage und/oder der Ist-Position der Sensoranordnung (8) in Abhängigkeit von jeweils einer Beschleunigungsmessung entlang einer Messachse des Dreiachsensensors (12) erfolgt.

## Claims

1. Method for a sensor arrangement (8) of a vehicle (2), comprising a vehicle parameter sensor (10) for detecting at least one vehicle parameter in at least one operating routine of the sensor arrangement (8), wherein the method features the following steps:
- Self-calibration of the vehicle parameter sensor (10) of the sensor arrangement (8) in a self-calibration routine of the sensor arrangement (8), preferentially after installation of the sensor arrangement (8) in the vehicle (2), wherein the actual location and/or actual position of the sensor arrangement (8) is determined automatically by means of the sensor arrangement (8) and is compared with a previously specified set location and/or set position of the sensor arrangement (8) stored in the sensor arrangement (8) for the at least one operating routine of the sensor arrangement (8) and
- output of an error message if the actual location and/or actual position of the sensor arrangement (8) determined automatically by means of the sensor arrangement (8) does not essentially correspond with any of the at least one set location and/or set position of the sensor arrangement (8) or,
- if the actual location and/or actual position of the sensor arrangement (8) determined automatically by the sensor arrangement (8) corresponds essentially with at least one set location and/or set position of the sensor arrangement (8), saving of the operating routine of the sensor arrangement (8) corresponding to this set location and/or set position of the sensor arrangement (8) for a subsequent operation of the self-calibrated vehicle parameter sensor (10) of the sensor arrangement (8)
**characterized in that**,
the automatic determination of the actual location and/or the actual position of the sensor arrangement (8) in its self-calibration routine is performed depending on at least one acceleration measurement of at least one acceleration sensor (12) of the sensor arrangement (8).

2. Method in accordance with claim 1,
**characterized in that**,
a plurality of set locations and/or set positions of the sensor arrangement (8) differing from each other are saved for a plurality of operating routines for the sensor arrangement (8) corresponding thereto and differing from each other.

3. Method in accordance with claim 1 or 2,
**characterized in that**,
the operating routine determined automatically by means of the self-calibration routine is saved in an unchangeable manner for the subsequent operation of the self-calibrated vehicle parameter sensor (10) of the sensor arrangement (8).

4. Method in accordance with one of claims 1 through 3,
**characterized in that**,
the self-calibration routine is launched automatically with an initial power supply to the sensor arrangement (8).

5. Method in accordance with one of claims 1 through 4,
**characterized in that**,
the self-calibration routine is automatically terminated after the actual location and/or actual position of the sensor arrangement (8) corresponds for the first time with one of the at least one saved set location and/or set position of the sensor arrangement (8).

6. Method in accordance with one of claims 1 through 5,
**characterized in that**,
the operating routine of the at least one operating routine, which is determined automatically by means of the self-calibration routine and saved for the subsequent operation of the self-calibrated vehicle parameter sensor (10) of the sensor arrangement (8) is automatically launched with a further power supply to the sensor arrangement (8) subsequent to the initial power supply to the sensor arrangement (8).

7. Method in accordance with claim 1 through 6,
**characterized in that**,
the at least one acceleration sensor (12) is designed as a three-axis sensor (12) and automatic determination of the actual location and/or actual position of the sensor arrangement (8) is performed in each case depending on an acceleration measurement along a measuring axis of the three-axis sensor (12).

## Revendications

1. Procédé pour un agencement de capteurs (8) d'un véhicule (2) comprenant un capteur de paramètre de véhicule (10) pour détecter au moins un paramètre de véhicule dans au moins une routine de fonctionnement de l'agencement de capteurs (8), le procédé présentant les étapes de procédé suivantes :
- auto-calibrage du capteur de paramètre de véhicule (10) de l'agencement de capteurs (8) dans une routine d'auto-calibrage de l'agencement de capteurs (8), de préférence après le montage de l'agencement de capteurs (8) dans le véhicule (2), la position réelle et/ou la position réelle de l'agencement de capteurs (8) étant déterminée automatiquement au moyen de l'agencement de capteurs (8) et comparée à au moins une position de consigne et/ou une position de consigne de l'agencement de capteurs (8) définie au préalable et mémorisée dans l'agencement de capteurs (8) pour au moins une routine de fonctionnement de l'agencement de capteurs (8) et
- émission d'un message d'erreur si la position réelle et/ou la position réelle de l'agencement de capteurs (8) déterminée automatiquement au moyen de l'agencement de capteurs (8) ne coïncide pour l'essentiel avec aucune position de consigne et/ou position de consigne de l'agencement de capteurs (8) ou,
- si la position réelle et/ou la position réelle de l'agencement de capteurs (8) déterminée automatiquement au moyen de l'agencement de capteurs (8) coïncide pour l'essentiel avec au moins une position de consigne et/ou position de consigne de l'agencement de capteurs (8), mémorisation de la routine de fonctionnement de l'agencement de capteurs (8) en corrélation avec cette position de consigne et/ou position de consigne de l'agencement de capteurs (8) pour un fonctionnement ultérieur du capteur de paramètre de véhicule (10) autocalibré de l'agencement de capteurs (8)
**caractérisé en ce que**
la détermination automatique de la position réelle et/ou de la position réelle de l'agencement de capteurs (8) dans sa routine d'autocalibrage s'effectue en fonction d'au moins une mesure d'accélération d'au moins un capteur d'accélération (12) de l'agencement de capteurs (8).

2. Procédé selon la revendication 1,
**caractérisé en ce que**
plusieurs positions de consigne et/ou positions de consigne différentes les unes des autres de l'agencement de capteurs (8) sont mémorisées pour plusieurs routines de fonctionnement en corrélation avec celles-ci et différentes les unes des autres pour l'agencement de capteurs (8).

3. Procédé selon la revendication 1 ou 2,
**caractérisé en ce que**
la routine de fonctionnement déterminée automatiquement au moyen de la routine d'autocalibrage est mémorisée de manière invariable pour l'exploitation ultérieure du capteur de paramètre de véhicule (10) autocalibré de l'agencement de capteurs (8).

4. Procédé selon l'une des revendications 1 à 3,
**caractérisé en ce que**
la routine d'autocalibrage est démarrée automatiquement lors de la première alimentation en tension de l'agencement de capteurs (8).

5. Procédé selon l'une des revendications 1 à 4,
**caractérisé en ce que**
la routine d'autocalibrage est terminée automatiquement après une première concordance de la position réelle et/ou de la position réelle de l'agencement de capteurs (8) avec au moins une position de consigne et/ou position de consigne de l'agencement de capteurs (8) mémorisée.

6. Procédé selon l'une des revendications 1 à 5,
**caractérisé en ce que**
la routine de fonctionnement d'au moins une routine de fonctionnement déterminée automatiquement au moyen de la routine d'autocalibrage et mémorisée pour l'exploitation ultérieure du capteur de paramètre de véhicule (10) autocalibré de l'agencement de capteurs (8) est démarrée automatiquement avec une alimentation en tension de l'agencement de capteurs (8) ultérieure à la première alimentation en tension de l'agencement de capteurs (8).

7. Procédé selon l'une des revendications 1 à 6,
**caractérisé en ce que**
au moins un capteur d'accélération (12) est conçu comme un capteur triaxial (12) et que la détermination automatique de la position réelle et/ou de la position réelle de l'agencement de capteurs (8) s'effectue en fonction d'une mesure d'accélération respective le long d'un axe de mesure du capteur triaxial (12).
